Europäisches Patentamt

European Patent Office

Office européen des brevets

(19)

(11) Veröffentlichungsnummer: **0 487 925 A1**

## (12) EUROPÄISCHE PATENTANMELDUNG

(21) Anmeldenummer: **91118582.5**

(22) Anmeldetag: **31.10.91**

(51) Int. Cl.⁵: **E04F 15/04**, B32B 21/13, B27M 3/04, B27D 1/00

(30) Priorität: **28.11.90 DE 9016158 U**

(43) Veröffentlichungstag der Anmeldung:
**03.06.92 Patentblatt 92/23**

(84) Benannte Vertragsstaaten:
**AT BE CH DE DK ES FR GB GR IT LI LU NL SE**

(71) Anmelder: **WASA MASSIVHOLZÖBEL GmbH**

**W-6751 Geiselberg/Pfalz(DE)**

(72) Erfinder: **Auer, Gerhard**
**Haupstrasse 8**
**W-6791 Hermersberg(DE)**

(74) Vertreter: **Dr. Fuchs, Dr. Luderschmidt**
**Dipl.-Phys. Seids, Dr. Mehler Patentanwälte**
**Abraham-Lincoln-Strasse 7, Postfach 4660**
**W-6200 Wiesbaden(DE)**

(54) **Laminatfussboden.**

(57) Die Erfindung betrifft einen Laminatfußboden (10) mit einem Sperrholzkörper (12). Dieser Laminatfußboden (10) weist wenigstens drei quer und längs wasserfest verleimte Sperrholzschichten (14) sowie mit jeweils einer Außenschicht (20) aus einem identischen Hartholz auf, die jeweils mit der Oberschicht des Sperrholzkörpers (12) über eine Leimschicht (18) aus kochfestem Leim verbunden ist. Das gesamte Laminat (10) ist mit einem ausgehärteten Holzbehandlungsöl an seiner Oberfläche getränkt.

EP 0 487 925 A1

Die Erfindung betrifft einen Laminatfußboden gemäß dem Oberbegriff des Anspruchs 1, insbesondere einen solchen Boden, der einen Sperrholzinnenkörper aufweist, der jeweils von einer Außenschicht aus einem Hartholz umgeben ist.

Laminatfußböden der eingangs erwähnten Art werden üblicherweise als Fertigparkett vertrieben. Sie bestehen aus einem gegenüber dem Material der Außenfläche relativ billigen Innenkörper mit Sperrholzaufbau. Dieser Innenkörper soll einerseits die Außenflächen gegen ein Verziehen bzw. Reißen sichern, andererseits - wie erwähnt - den Preis der gesamten Laminatanordnung möglichst gering halten.

Zur Erfüllung des letztgenannten Zwecks ist jeweils die als Sichtfläche dienende Außenfläche mit einer ausgewählten Hartholzschicht versehen, während die Rückseite üblicherweise mit einem anderen Material abgedeckt ist, da es lediglich die relativ weiche Sperrholzinnenschicht zu schützen hat.

Weiterhin wird die Oberfläche häufig werksseitig mit einem Hartlack, beispielsweise einem DD-Lack, versiegelt und ist aus diesen Gründen sowohl trittfest als auch wasserundurchlässig. Lediglich an den seitlichen Stoßflächen kann Wasser eindringen, was dann allerdings größte Probleme nach sich zieht. Es kommt daher bei einer übermäßigen Wasserbeaufschlagung zum Quellen der innenliegenden Schichten und somit zur Zerstörung des gesamten Fußbodens.

Insofern konnten derartige Laminatfußböden nicht in Naßräumen, beispielsweise in Bädern und dergl., eingesetzt werden.

Das gleiche gilt für Räume, die mit einer Fußbodenheizung ausgestattet sind. In solchen Fällen kommt es zu einer übermäßigen Erwärmung des Fußbodens gegenüber der Umgebung, was zu Folge hat, daß die bekannten Parkettböden wegen der Temperaturspannung reißen oder sich verwerfen.

Der Erfindung liegt daher die Aufgabe zugrunde, einen Laminatfußboden der eingangs erwähnten Art zur Verfügung zu stellen, der einerseits in Naßräumen eingesetzt werden kann und andererseits auch als Fußbodenbelag bei einer Fußbodenheizung dienen kann.

Die Aufgabe wird gelöst durch die Merkmale des Anspruchs 1, insbesondere einen

Laminatfußboden mit einem Sperrholzinnenkörper, aufweisend wenigstens drei quer und längs wasserfest verleimte Holzschichten und mit jeweils einer Außenschicht einer identischen Hartholzart, die jeweils mit der Oberschicht des Sperrholzinnenkörpers kochfest verleimt ist, wobei die Außenschichten mit einem härtenden Holzbehandlungsöl getränkt sind.

Erfindungsgemäß wurde festgestellt, daß ein solcher Laminatfußboden sowohl in Naßzellen als auch in Räumen eingesetzt werden kann, die mit einer Fußbodenheizung ausgestattet sind. In beiden Fällen kommt es weder zu einem Verwerfen noch zu einem Reißen oder Aufquellen des Laminatfußbodens, wenn Wasser oder Wasserdampf bzw. die bei einer Fußbodenheizung üblichen Temperaturen von 35 - 50°C von der Rückseite des Bodens her einwirken.

So kann der erfindungsgemäße Laminatfußboden beispielsweise im Bodenbereich eines Bades oder einer Dusche eingesetzt werden, wobei zusätzlich auch die Wand damit ausgestattet werden kann. Dies gilt u.a. auch für den Wandbelag innerhalb einer Duschanordnung. Andererseits läßt sich dieses Laminat auch im Küchenbereich einsetzen.

Das erfindungsgemäße Laminat ist durch einen symmetrischen Aufbau gekennzeichnet, d.h. beiderseits einer gedachten Zentralebene sind jeweils identische Schichten angeordnet. Dies gilt sowohl für die aus mehreren Schichten zusammengesetzte Sperrholzinnenschicht als auch für die beiden Außenschichten in Form einer Hartholzschicht.

Die Sperrholzinnenschicht weist mindestens einen dreischichtigen, vorzugsweise einen fünfschichtigen Aufbau auf. In diesen Sperrholzschichten verläuft die jeweils nächste Schicht quer zur angrenzenden Schicht in der Holzfaserrichtung. Demzufolge ist bei einem dreischichtigen Aufbau die mittlere quer verlaufende Schicht von zwei längs verlaufenden Schichten umgeben.

Der Sperrholzinnenkörper ist mit einer wasserfesten Verleimung zwischen seinen Schichten ausgestattet. Dabei bedeutet "wasserfeste Verleimung" die Eigenschaft, daß die Verleimungsschichten bei 100 %iger Feuchtigkeit (beispielsweise beim Eintauchen der Sperrholzanordnung in Wasser) nicht aufgehen. Andererseits kann jedoch eine wasserfeste Verleimung durch die üblicherweise erfolgende Aufnahme geringer Mengen Wassers noch quellfähig sein.

Als Hölzer für diese Sperrholzschicht lassen sich die üblichen Holzarten, wie Fichte, Buche, Birke und dergl., einsetzen. Diese Sperrholzschicht ist im übrigen unkritisch, sofern sie zumindest wasserfest verleimt ist und bei Wasser- und Wärmebeaufschlagung sich nicht verspannt, was vorteilhafterweise durch einen symmetrischen Aufbau - wie vorstehend erwähnt - gewährleistet ist.

Auch die Dicke ist an sich unkritisch und kann in einem Bereich von 3 - 12 mm, vorzugsweise zwischen 5,5 und 11 mm, liegen.

Als Außenschicht wird gemäß der Erfindung eine Hartholzschicht eingesetzt, die üblicherweise auch hohe Punktlasten ohne Eindellung bzw. Bildung von Löchern aufnimmt. Als Materialien kommen üblicherweise Harthölzer, wie Buche, Esche, Ahorn, Eiche sowie exotische Harthölzer, wie Meranti, Teak etc., in Frage.

Für die Zwecke der Erfindung von Bedeutung ist es, daß sowohl die Oberseite als auch die Unterseite der Sperrholzinnenschicht mit einer identischen Hartholzschicht versehen ist, d.h. sowohl das Harzholzmaterial als auch die Dicke der Hartholzschicht sind auf beiden Seiten identisch. Hierdurch wird ebenfalls eine Spannungsfreiheit gewährleistet.

Die Außenschicht ist üblicherweise mindestens 0,8 mm stark und kann im Beispielsfall etwa 2,8 - 5 mm betragen.

Die Hartholzaußenschicht wird mittels eines kochfesten Leims an den Sperrholzinnenkörper gebunden. Dieser Leim wird in einer üblichen Leimauftragsmaschine in einer Menge von etwa 150 - 200 g/m$^2$ aufgetragen. Anschließend wird das entsprechende Hartholzfurnier aufgelegt und danach mittels der üblichen Preßtechnik mit einer Furnierpresse bei Temperaturen von 60 - 80°C, vorzugsweise etwa 70°C, und Drücken bis zu 300 bar mehrere Minuten lang heißverpreßt. Danach erfolgt eine Nachhärtung des kochfesten Leims, der vorzugsweise kein Formaldehyd enthält. Unter "kochfest" wird hier verstanden, daß die Leimverbindung selbst bei 6-stündiger Behandlung in kochendem Wasser nicht aufgeht.

Nachdem beide Seiten des Sperrholzinnenkörpers mit je einer identischen Harzholzaußenschicht mittels der Furnierpresse versehen worden sind, wird das erhaltene Laminat durch Schleifen oberflächenbehandelt. Larüber hinaus wird der gesamte Rand des Laminats mit einer Feder- bzw. Nutdurchfräsung versehen, wobei die jeweils gegenüberliegenden Ränder ein Nut-Feder-Paar bilden.

Den Abschluß der Behandlung bildet das Tränken des erhaltenen Laminats mit einem selbsthärtenden (trocknenden) Holzbehandlungsöls, das vorzugsweise aus Leinöl und Terpengemischen besteht. Dabei wird das Laminatpaket ca. 10 - 15 Minuten bei Raumtemperatur mit dem Holzbehandlungsöl getränkt, wobei das Öl bis zu 0,5 mm in die zur Verfügung stehende Oberfläche eindringt, d.h. nicht nur in die Hartholzaußenschicht selbst, sondern auch in die Seitenrandschichten (Nut und Feder sowie die angeschnittene Sperrholzschicht). Dabei nimmt das Laminat ca. 150 - 180 g Holzbehandlungsöl/m$^2$ auf. Dieses Öl härtet danach innerhalb eines Tages vollständig aus und bildet dann eine wirksame Feuchtigkeits- und Schmutzsperre. Es ist also feuchtigkeitsunempfindlich und darüber hinaus atmungsaktiv, wobei es einen Befall des Holzes von Mikroorganismen wirksam abwenden kann.

Ein derart hergestellter Laminatfußboden wird in Form von Paneelen gefertigt, die beispielsweise eine Abmessung von 18 cm x 180 cm aufweisen können. Sie lassen sich wie übliches Fertigparkett leicht verlegen. Dies gilt insbesondere für die schwimmende Verlegung, die bei dem erfindungsgemäßen verwerfungsstabilen Boden besonders vorteilhaft ist. Ein in dieser Art hergestellter Fußboden ist hochstrapazierfähig, d.h. er kann auch in einem viel begangenen Bereich (Kaufhäuser und dergl.) eingesetzt werden, ohne daß er allzu sehr verschmutzt und unansehnlich wird. Er ist dabei pflegefreundlich und nimmt durch eine intensive Benutzung eher an Glanz zu.

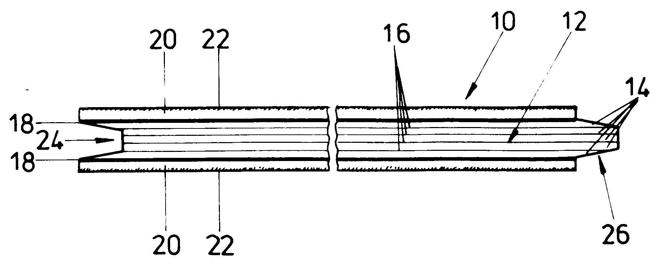

Die Erfindung wird anhand eines Ausführungsbeispiels unter Bezugnahme auf die Zeichnung erläutert.

Die einzige Figur stellt einen vergrößerten Querschnitt durch einen Laminatfußboden dar.

Das Laminat 10 weist einen Sperrholzkörper 12 auf, der aus fünf längs bzw. quer verlaufenden Sperrholzschichten 14 gebildet ist. Diese Sperrholzschichten 14 sind mittels Schichten 16 aus wasserfestem Leim untereinander verbunden.

Ein solcher Sperrholzkörper 12 ist beidseitig mit einer weiteren Leimschicht 18 versehen, die aus einem kochfesten Leim besteht. Hieran schließt sich als Außenschicht 20 eine Schicht aus Hartholz an, die mittels einer Furnierpressung an dem Sperrholzkörper über die zweite Leimschicht 18 befestigt ist.

Der Oberflächenbereich 22 dieser Außenschicht 20 sowie die Seitenränder des Laminats 10 sind mit Holzöl getränkt.

Schließlich weist das Laminat eine seitliche Nut 24 und eine Feder 26 auf, die üblicherweise aufgrund ihrer Konizität - wie in der Zeichnung dargestellt - formschlüssig zusammenpassen.

**Patentansprüche**

1. Laminatfußboden (10) mit einem Sperrholzkörper (12), aufweisend wenigstens drei quer und längs wasserfest verleimte Sperrholzschichten (14) sowie mit jeweils einer Außenschicht (20) aus einem identischen Hartholz, die jeweils mit der Oberschicht des Sperrholzkörpers (12) über eine Leimschicht (18) aus kochfestem Leim verbunden ist, wobei das gesamte Laminat (10) mit einem ausgehärteten Holzbehandlungsöl an seiner Oberfläche getränkt ist.

2. Laminat nach Anspruch 1, dadurch gekennzeichnet, daß die Außenschicht (20) mindestens 0,8 mm dick ist.

3. Laminat nach Anspruch 2, dadurch gekennzeichnet, daß die Außenschicht (20) etwa 2,8 - 5 mm dick ist.

4. Laminat nach einem der Ansprüche 1 bis 3, dadurch gekennzeichnet, daß die Außenschicht (20) aus Buche, Esche, Ahorn, Eiche oder exotischen Hölzern als Hartholzschicht besteht.

5.  Laminat nach einem der Ansprüche 1 bis 4, dadurch gekennzeichnet, daß etwa 150 - 200 g/m$^2$ kochfester Leim in der Leimschicht (18) aufgetragen sind.

6.  Laminat nach einem der Ansprüche 1 bis 5, dadurch gekennzeichnet, daß die Außenschicht (20) nach einer Behandlung in einer Furnierpresse geschliffen worden ist.

7.  Laminat nach einem der Ansprüche 1 bis 6, dadurch gekennzeichnet, daß das Laminat (10) mit dem gehärteten Holzöl bis zu einer Tiefe von etwa 0,5 mm mit etwa 150 - 180 g/m$^2$ Holzöl getränkt worden ist.

8.  Laminat nach Anspruch 7, gekennzeichnet durch eine Nut (24) und eine Feder (26) an den jeweils gegenüberliegenden Rändern des Laminats (10).

Europäisches
Patentamt

**EUROPÄISCHER RECHERCHENBERICHT**

Nummer der Anmeldung

EP    91 11 8582

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | FR-A-2 585 285 (GAZEAU) <br><br> * Seite 1, Zeile 37 - Seite 3, Zeile 34 * <br> --- | 1,2,4,6, 8 | E04F15/04 <br> B32B21/13 <br> B27M3/04 <br> B27D1/00 |
| A | DE-A-3 631 390 (KURZ) <br> * Spalte 4, Zeile 60 - Spalte 7, Zeile 20; Abbildungen 1,2 * <br> --- | 1,3 | |
| A | DE-C-295 042 (BRAUN) <br> * das ganze Dokument * <br> --- | 1 | |
| A | US-A-2 257 048 (FULBRIGHT) <br> * das ganze Dokument * <br> --- | 1,4,8 | |
| A | GB-A-852 547 (INSULARBO LTD.) <br> * Seite 3, Zeile 51 - Zeile 106; Abbildung 2 * <br><br> ----- | 1,3,4 | |

**RECHERCHIERTE SACHGEBIETE (Int. Cl.5 )**

E04F
B32B
B27M
B27D

Der vorliegende Recherchenbericht wurde für alle Patentansprüche erstellt

| Recherchenort | Abschlußdatum der Recherche | Prüfer |
|---|---|---|
| DEN HAAG | 21 FEBRUAR 1992 | AYITER J. |